Europäisches Patentamt

(19) European Patent Office

Office européen des brevets

(11) Publication number: **0 295 758 B1**

(12) **EUROPEAN PATENT SPECIFICATION**

(45) Date of publication of patent specification:
21.11.91 Bulletin 91/47

(51) Int. Cl.⁵: **B29C 67/14,** B29C 43/12,
// B29K105/06, B29L31/30

(21) Application number: 88201308.9

(22) Date of filing: 25.05.88

(54) Method for forming a fiber reinforced structure.

(30) Priority: 15.06.87 US 61508

(43) Date of publication of application:
21.12.88 Bulletin 88/51

(45) Publication of the grant of the patent:
21.11.91 Bulletin 91/47

(84) Designated Contracting States:
DE FR GB IT SE

(56) References cited:
EP-A- 0 234 341
DE-B- 1 262 011
US-A- 3 135 640
US-A- 4 314 964

(73) Proprietor: THE BUDD COMPANY
3155 W. Big Beaver Road
Troy, MI 48084 (US)

(72) Inventor: Freeman, Richard Benjamin
405, Riblett Lane,
Wilmington, Delaware 19809 (US)

(74) Representative: Finck, Dieter et al
Patentanwälte v. Füner, Ebbinghaus, Finck
Mariahilfplatz 2 & 3
W-8000 München 90 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention relates to a method for forming a fiber reinforced structure having a sheet-like laminate fiber section joined to a hollow fiber section.

Methods for forming only a hollow fiber reinforced structure are described in EP-A1 0234341 (this document falls under Article 54(3)), and EP-A1 0212140. According to these methods a mold is provided having a pair of mold pieces disposed to be opened or closed, the mold pieces having inner cavity forming surface portions spaced apart from each other by a given distance forming a cavity for defining the hollow section. Further fiber material is placed on the cavity forming surface portions of said cavity of said mold pieces. After that an inflatable member is placed between said fiber material placed on said cavity forming portions. Then said mold is closed and said inflatable member is inflated. Now resin is injected to impregnate said fiber material. Finally said resin is cured to form said hollow fiber reinforced structure formed in said cavity.

In many automotive and other products, it is necessary to form parts in which a sheet-like laminate consisting of one or more layers joined to hollow sections to form integral structures. Such automotive parts for example may include rear panels, dashes, fire walls or the like.

The invention is based on the problem to provide a reliable method for forming a reinforced structure including a sheet-like laminate fiber section joined to a hollow fiber section in a single molding operation.

In accordance with the present invention this problem is solved by a method comprising the following steps :

a) providing a mold having a pair of mold pieces disposed to be opened or closed, the mold pieces having inner cavity forming surface portions spaced apart from each other by a given distance forming a cavity for defining the exterior of the hollow section, the mold pieces further including inner complementary surface portions extending from the cavity forming surface portions and defining the sheet-like section extending from the hollow section ;

b) placing first fiber material on at least one of the complementary surface portions of said mold pieces when said mold is open ;

c) placing second fiber material leading from said first fiber material on the cavity forming surface portions of said cavity of said mold pieces ;

d) placing an inflatable member between said second fiber material placed on the cavity forming portions ;

e) closing said mold ;

f) inflating said inflatable member ;

g) injecting resin to impregnate said first fiber material and said second fiber material ;

h) curing said resin to form said fiber reinforced structure with said sheet-like laminate section integrally joined to said hollow section formed in said cavity.

The present invention provides a method for fabricating in a single molding operation a structure comprising a solid laminate containing a local hollow section. The method overcomes the problem of making large intricate structures generally characterised by comparatively thin, fiber reinforced plastic sheets which contain local areas of hollow section for added strength.

Preferably said first fiber material completely fills the space between said complementary surface portions when said mold is closed.

Advantageously the mold surfaces define an automotive rear panel.

It is convenient that a single piece of fiber material covers both a complementary mold surface portion of one mold piece and its adjacent cavity forming surface portion.

In a preferred method the step g) comprises injecting the resin into a side of the mold where ends of the complementary mold surface portions meet.

In the following embodiments of the invention are further explained by means of the accompanying drawings, wherein

Fig. 1 is a cross-sectional view of a rear panel for an automobile, in accordance with the present invention, and

Figs. 2 to 4 illustrate cross-sectional broken away views of portions of different embodiments of the present invention.

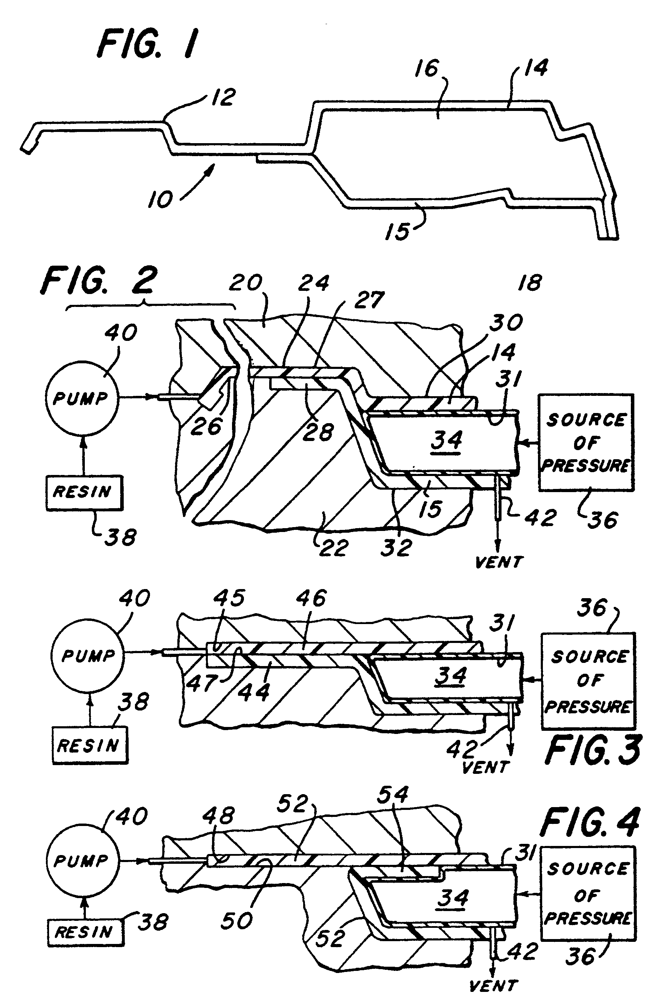

Referring to Fig. 1, a cross-sectional view of a rear panel in an automobile, for example, comprises an irregular surface made up of solid laminate sections 12 and a hollow section 14 made up of an irregular surface to form a hollow area 16. In the present invention, the parts illustrated in Fig. 1 are made up of a reinforced fiberglass material. The present invention is directed toward a method for molding a single laminate layer section, such as section 12, with a multi-layered or hollow section which may be made up of a section 14 leading to section 12 and an addition piece 15 which may be molded with the section 14 to form the hollow area 16.

The hollow area 16 is used in areas where stronger or stiffer sections are required. These sections could be in areas of the rear panel, dash members or where a hollow conduit is beneficial in an automobile.

A method of forming a structure such as the structure 10 is illustrated in Figs. 2, 3 and 4 in which slightly different embodiments are involved. Most of the elements illustrated in Figs. 2, 3 and 4 are substantially the same as that illustrated in Fig. 1 and therefore the same reference numbers will be assigned. The only difference in the Figures 2, 3 and 4 with respect to Fig. 1 are in the specific structures formed and in the areas at which the hollow areas are joined to the single layer laminate portion of the fiber material.

Referring to Fig. 2, a mold 18 comprises an upper mold piece 20 and a lower mold piece 22. The mole 18 is adapted to be opened and closed by conventional means with the position illustrated in Fig. 2 illustrating the mold 18 in a closed position.

The mold pieces 20 and 22 include complementary sections 24 and 26, adapted to receive the fiberglass piece 12 and the end 28 of the fiberglass piece 15. The material between the area between the complementary pieces, which may or may not be flat areas, is referred to as, a laminate having a single layer. The surfaces 24 and 26 are referred to as being complementary because they are shaped in the opposite way so as to accommodate the pieces 12 and the end piece 28.

In practicing the present invention, the fiber material 12 is pre-placed within the inner wall of the upper mold piece 20. The piece 15 is pre-placed in the lower mold piece 22 in the manner illustrated in Fig. 1

When the mold 18 is closed, a cavity is formed between sections 30 and 32 on the inner surfaces of the mold pieces 20 and 22. Prior to closing the mold 18, an inflatible member or bladder 31 pre-placed between the fiber pieces 14 and 15 inside the cavity 34 of the mold.

After the fiber reinforced pieces are preformed on the inner surfaces of the mold pieces with the inflatible member 31 is inserted between the fiber material in the cavity of the mold, the mold pieces 20 and 22 are closed in the manner illustrated in Fig. 2. At this point, pressure is applied into the inflatible member 31 from a source of pressure 36, which may be compressed air or other suitable gas material.

After the mold 10 has been closed and pressure applied to the inflatible member 31, resin from a source 38 is injected through a pump 40 into the fiber reinforced material between the mold pieces. As the resin is injected into the fiber, air is vented from the fiber pieces through a vent 42.

Perimeter feeding of the resin and venting of the air may be employed as described in the EP-A1-0234341. The details relating to grooves for feeding the resin and venting the air are not illustrated because they are only indirectly related to the present invention.

Figs. 3 and 4, illustrate different embodiments of the present invention in which different ways for joining a laminate or single layer section of fiber reinforced material to the hollow section are illustrated. The mold shapes are slightly different to accommodate the different manners of joining the fiber. The resin transfer molding steps are the same as described in connection with Fig. 2.

In Fig. 3, the complementary mold areas 45 and 47 are flat to receive flat section of fiber 44 and 46 therebetween. The pieces 44 and 46 continue and are placed inside the cavity 34 of the mold. The inflatible bag is placed in the cavity and the subsequent steps are followed as previously described.

In Fig. 4, the complementary sections 48 and 50 are related flat to receive fiber section 52 therebetween. A fiber section 52 forms part of the hollow area to be formed in the cavity 34 of the mold. An end section 54 is folded over in the direction leading to the cavity 34. The various subsequent steps in the molding process is the same as those described in connection with Fig. 2.

## Claims

1. A method for forming a fiber reinforced structure (10) having a sheet-like laminate section (12) joined to a hollow section (16), the method comprising the following steps :

a)  providing a mold (18) having a pair of mold pieces (20, 22) disposed to be opened or closed, the mold pieces (20, 22) having inner cavity forming surface portions (30, 32) spaced apart from each other by a given distance forming a cavity (34) for defining the exterior of the hollow section (16), the mold pieces (20, 22) further including inner complementary surface portions (24, 26) extending from the cavity forming surface portions (30, 32) and defining the sheet-like section (12) extending from the hollow section (16) ;

b)  placing first fiber material (27, 28) on at least one of the complementary surface portions (24, 26) of said mold pieces (20, 22) when said mold (18) is open ;

c)  placing second fiber material (14, 15) leading from said first fiber material (27, 28) on the cavity forming surface portions (30, 32) of said cavity (34) of said mold pieces (20, 22) ;

d)  placing an inflatable member (31) between said second fiber material (14, 15) placed on the cavity forming portions (30, 32) ;

e)  closing said mold (18) ;

f)  inflating said inflatable member (31) ;

g)  injecting resin to impregnate said first fiber material (27, 28) and said second fiber material (14, 15) ;

h)  curing said resin to form said fiber reinforced structure (10) with said sheet-like laminate section (12) integrally joined to said hollow section (16) formed in said cavity (34).

2. The method according to claim 1, characterised in that said first fiber material (27, 28) completely fills the space between said complementary surface portions (24, 26) when said mold (18) is closed.

3. The method according to claim 1 or 2, characterised in that the mold surfaces (30, 32, 24, 26) define an automotive rear panel.

4. The method according to one of the preceding claims, characterised in that a single piece (44, 46, 52) of fiber material covers both a complementary mold surface portion of one mold piece and its adjacent cavity forming surface portion.

5. The method according to one of the preceding claims characterised in that step g) comprises injecting the resin into a side of the mold where ends of the complementary mold surface portions meet.

**Patentansprüche**

1. Verfahren zum Formen eines faserverstärkten Bauteils (10), das einen plattenartigen Schichtstoffabschnitt (12) hat, der mit einem hohlen Abschnitt (16) verbunden ist, wobei das Verfahren die folgenden Schritte aufweist :

a) Bereitstellen einer Form (18), die ein Paar von Formstücken (20, 22) hat, die für das Öffnen oder Schließen angeordnet sind, wobei die Formstücke (20, 22) einen inneren Hohlraum formende Oberflächenteile (30, 32) haben, die im Abstand voneinander in einer vorgegebenen Entfernung angeordnet sind, wodurch ein Hohlraum (34) zur Begrenzung des Außenraumes des hohlen Abschnitts (16) gebildet wird, wobei die Formstücke (20, 22) ferner innere komplementäre Oberflächenabschnitte (24, 26) aufweisen, die sich von den einen Hohlraum formenden Oberflächenteilen (30, 32) aus erstrecken und den plattenartigen Abschnitt (12) bilden, der sich von dem hohlen Abschnitt (16) aus erstreckt ;

b) Plazieren eines ersten Fasermaterials (27, 28) auf wenigstens einem der komplementären Oberflächenabschnitte (24, 26) der Formstücke (20, 22), wenn die Form (18) offen ist ;

c) Plazieren eines zweiten Fasermaterials (14, 15), ausgehend von dem ersten Fasermaterial (27, 28), auf den einen Hohlraum formenden Oberflächenteilen (30, 32) des Hohlraums (34) der Formstücke (20, 22) ;

d) Plazieren eines aufblasbaren Elements (31) zwischen das zweite Fasermaterial (14, 15), das auf den einen Hohlraum formenden Teilen (30, 32) angeordnet ist ;

e) Schließen der Form (18) ;

f) Aufblasen des aufblasbaren Elements (31) ;

g) Einspritzen von Harz zur Imprägnierung des ersten Fasermaterials (27, 28) und des zweiten Fasermaterials (14, 15) ;

h) Aushärten des Harzes zur Formung dem faserverstärkten Bɛ ɪils (10), wobei der plattenartige Schichtstɔ ʌbschnitt (12) in einem Stück mit dem hohʋen Abschnitt (16) verbunden ist, der in dem Hohlraum (34) geformt ist.

2. Verfahren nach Anspruch 1, dadurch gekennzeichnet, daß das erste Fasermaterial (27, 28) den Raum zwischen den komplementären Oberflächenabschnitten (24, 26) vollständig füllt, wenn die Form (18) geschlossen ist.

3. Verfahren nach Anspruch 1 oder 2, dadurch gekennzeichnet, daß die Formoberflächen (30, 32, 24, 26) ein Heckteil eines Kraftfahrzeugs begrenzen.

4. Verfahren nach einem der vorhergehenden Ansprüche, dadurch gekennzeichnet, daß ein einziges Stück (44, 46, 52) Fasermaterial sowohl ein komplementäres Formoberflächenteil eines Formstücks als auch das ihm benachbarte, einen Hohlraum formende Oberflächenteil bedeckt.

5. Verfahren nach einem der vorhergehenden Ansprüche, dadurch gekennzeichnet, daß Schritt g) Einspritzen des Harzes in eine Seite der Form beinhaltet, wo Enden der komplementären Formoberflächenteile zusammentreffen.

**Revendications**

1. Procédé pour former une structure (10) armée de fibres ayant une partie stratifiée (12) analogue à une feuille, jointe à une partie creuse (16), le procédé comprenant les étapes suivantes qui consistent :

a) à prévoir un moule (18) ayant deux pièces (20, 22) de moule disposées de façon à être ouvertes ou fermées, les pièces (20, 22) du moule comportant des parties de surface (30, 32) formant une cavité intérieure, espacées l'une de l'autre d'une distance donnée, formant une cavité (34) pour définir l'extérieur de la partie creuse (16), les pièces (20, 22) du moule comprenant en outre des parties de surface complémentaires intérieures (24, 26) s'étendant depuis les parties de surface (30, 32) formant la cavité et définissant la partie (12) analogue à une feuille s'étendant depuis la partie creuse (16) ;

b) à placer une première matière fibreuse (27, 28) sur au moins l'une des parties de surface complémentaires (24, 26) desdites pièces (20, 22) du moule lorsque ledit moule (18) est ouvert ;

c) à placer une seconde matière fibreuse (14, 15) à partir de ladite première matière fibreuse (27, 28) sur les parties de surface (30, 32) formant ladite cavité (34) desdites pièces (20, 22) du moule ;

d) à placer un élément gonflable (31) dans ladite seconde matière fibreuse (14, 15) placée sur les parties (30, 32) formant la cavité ;

e) à fermer ledit moule (18) ;

f) à gonfler ledit élément gonflable (31) ;

g) à injecter une résine pour imprégner ladite première matière fibreuse (27, 28) et ladite seconde matière fibreuse (14, 15) ;

h) à faire durcir ladite résine pour former ladite structure (10) armée de fibres, avec ladite partie stratifiée (12) analogue à une feuille, jointe de façon intégrée à ladite partie creuse (16) formée dans ladite cavité (34).

2. Procédé selon la revendication 1, caractérisé en ce que ladite première matière fibreuse (27, 28) remplit complètement l'espace compris entre lesdites parties de surface complémentaires (24, 26) lorsque ledit moule (18) est fermé.

3. Procédé selon la revendication 1 ou 2, caractérisé en ce que les surfaces (30, 32, 24, 26) du moule définissent un panneau arrière d'automobile.

4. Procédé selon l'une des revendications précédentes, caractérisé en ce qu'une seule pièce (44, 46, 52) de matière fibreuse recouvre à la fois une partie de surface de moule complémentaire d'une pièce du moule et sa partie de surface adjacente formant une cavité.

5. Procédé selon l'une des revendications précédentes, caractérisé en ce que l'étape g) consiste à injecter la résine dans un côté du moule où des extrémités des parties de surface de moule complémentaires se rejoignent.

# FIG. 1

# FIG. 2

FIG.3

FIG.4